# EUROPEAN PATENT APPLICATION

(11) **EP 4 005 445 A1**
(43) Date of publication of application: **01.06.2022**
(21) Application number: 20848014.5
(22) Date of filing: 28.07.2020
(51) Int. Cl.: A47J 43/08, A47J 43/046

(54) **FOOD MACHINE**

(30) Priority: 29.07.2019 CN 201921202110 U
(71) Applicant: Zhejiang Shaoxing Supor Domestic Electrical Appliance Co., Ltd., Shaoxing, Zhejiang 312017 (CN)
(72) Inventor: YANG, Baobin, Shaoxing, Zhejiang 312017 (CN)
(74) Representative: LLR
(86) International application number: PCT/CN2020/105131
(87) International publication number: WO 2021/018132

(57) **Abstract**

A food machine comprises a machine base (1) and a pot (2) assembled to the machine base (1), the pot (2) is provided inside with a removable cutter assembly (3), the machine base (1) being provided inside with a first driving mechanism (4) that drives the removable cutter assembly (3); the first driving mechanism (4) comprises a first driving assembly (40) provided with a first magnetic member (402) and a second driving assembly (41) connected with the first driving assembly (40), and the removable cutter assembly (3) comprises a rotary shaft assembly (30) adapted to the first driving assembly (40) and a stirring cutter assembly (31) adapted to the second driving assembly (41), the rotary shaft assembly (30) being provided with a second magnetic member (3022) adapted to the first magnetic member (402), the stirring cutter assembly (31) being provided with a third magnetic member (311), the second driving assembly (41) being provided with a fourth magnetic member (411) adapted to the third magnetic member (311). By providing the first driving assembly (40) and the second driving assembly (41), the mode of driving the removable cutter assembly (4) is changed from one-end driving to multi-point driving, thus increasing the torsion driving the stirring cutter assembly (31), requiring less effort for overall driving, and effectively avoiding the phenomenon of shifting in position of the removable cutter assembly (3) in the case of one-end driving.

## Description

### Technical Field

The present invention relates to the field of small home appliances, and in particular, relates to a food machine.

### Background

Currently, in a high end configuration of a food processor, a stirring/crushing assembly is generally provided as a removable assembly to facilitate cleaning. As no structure for fixing the stirring/crushing assembly is provided at the bottom of a pot body of a food processor with a removable stirring/crushing assembly, magnetic driving is mostly used for a driving mechanism. If a single-point magnetic member is used for driving, then in the event that the torsion of the food processor is insufficient, the stirring/crushing assembly may shift in position and thus be unable to ensure that the product achieves its corresponding function.

### Summary of the invention

An objective of the present invention is to solve the above-described problem.

According to a first aspect of the present application, a food machine is provided, comprising a machine base and a pot assembled to the machine base, the pot being provided inside with a removable cutter assembly, the machine base being provided inside with a first driving mechanism that drives the removable cutter assembly; wherein the first driving mechanism comprises a first driving assembly provided with a first magnetic member and a second driving assembly connected with the first driving assembly, wherein the removable cutter assembly comprises a rotary shaft assembly adapted to the first driving assembly and a stirring cutter assembly adapted to the second driving assembly, wherein the rotary shaft assembly is provided with a second magnetic member adapted to the first magnetic member, the stirring cutter assembly is provided with a third magnetic member, and the second driving assembly is provided with a fourth magnetic member adapted to the third magnetic member. By achieving the positioning and driving of the removable cutter assembly in the pot by means of the cooperation between the first magnetic member and the second magnetic member and changing the mode of driving the removable cutter assembly from one-end driving to multi-point driving by means of the cooperation between the third magnetic member and the fourth magnetic member, the torsion driving the stirring cutter assembly is increased, overall driving requires less effort, and the phenomenon of shifting in position of the removable cutter assembly in the case of one-end driving is effectively avoided.

Further, the first driving assembly comprises a body part and the first magnetic member, which is provided inside the body part, the rotary shaft assembly comprises a first rotary shaft and a rotating member removably assembled to the first rotary shaft and comprising a base body and the second magnetic member, which is adapted to the first magnetic member and provided inside the base body, the stirring cutter assembly comprises a stirring cutter extending from the base body and the third magnetic member, which is provided inside the stirring cutter, and the second driving assembly comprises a driving rod extending radially from the body part and provided with the fourth magnetic member, which is adapted to the third magnetic member. The cooperation between the first magnetic member and the second magnetic member enables the rotating member to be driven to rotate at a specific position and thus drive the entire removable cutter assembly to rotate. The cooperation between the third magnetic member and the fourth magnetic member enhances the rotating torsion of the stirring cutter and improves the product's stirring performance.

Further, the stirring cutter is provided with a roller assembly located on the same side as the third magnetic member and comprising a roller support assembled to the stirring cutter and a roller provided at the roller support. By providing the roller assembly, friction caused by the stirring cutter being pressed against the bottom of the pot when the magnetic force is excessive can be prevented, effectively protecting the stirring cutter and the bottom of the pot from wearing and reducing resistance to the rotation of the stirring cutter.

Further, the driving rod is provided radially with at least one receiving part inside which the fourth magnetic member is received; and the stirring cutter is provided with at least one assembling part inside which the third magnetic member is provided, the receiving part corresponding to the assembling part. The number needed of the fourth magnetic member and the third magnetic member can be determined based on product design requirements, providing flexibility.

Further, the machine base is provided inside with a transmission mechanism that drives the first driving mechanism to rotate and comprises an electric motor and a first reduction gear set rotably connected with the electric motor, the first reduction gear set comprising a first gear assembled to a tail end of an electric motor shaft of the electric motor and a second gear drivingly connected with the first gear by a transmission belt. The transmission mechanism provides power source for the functioning of the food machine and the first reduction gear set reduces the rotating speed of the electric motor so that the stirring cutter assembly receives a higher torsion, facilitating the achievement of different functions of the food machine.

Further, the first driving assembly is assembled to a third gear that is drivingly connected with the second gear or indirectly connected with the second gear via a fourth gear. By providing the fourth gear, the rotating speed of the electric motor can be further reduced for output, while a direct connection between the third gear and the second gear further simplifies the product's structure.

Further, the second gear is provided with a first coupler, and the third gear or the fourth gear is provided with a second coupler adapted to the first coupler, the first coupler and the second coupler being provided coaxially. With the first coupler and the second coupler being provided coaxially, the output efficiency of the transmission connection between the third gear and the second gear or between the fourth gear and the second gear can be ensured.

Further, the first magnetic member is provided inside a first box assembled to the body part and provided with an assembling hole through which an output shaft of the third gear passes to drive the first driving mechanism to rotate. By providing the first magnetic member inside the first box, damage to the first magnetic member during use can be avoided while simplifying the assembly between the first magnetic member and the body part.

Further, the machine base is provided inside with a first accommodating chamber that receives the electric motor and a second accommodating chamber that receives the first reduction gear set, and the pot comprises a base provided with a third accommodating chamber that receives the first driving mechanism and a pot body assembled to the base.

Further, the pot body comprises a side wall and a bottom wall provided with a heating assembly and a temperature control assembly, a heat isolating plate being provided between the pot body and the base. By providing the heat isolating plate, the first magnetic member and the fourth magnetic member can be better protected from the phenomenon of stopping being magnetic when heated, ensuring normal functioning of the product.

It should be understood that the general description above and the detailed description below are merely illustrative and made by way of example and cannot limit the present invention.

### Brief description of the drawings

In order to describe more clearly the technical solutions in embodiments of the present invention, the accompanying drawings to be used in describing the embodiments below are described briefly. Obviously, the accompanying drawings described below merely show some embodiments of the present invention. To an ordinary person skilled in the art, other drawings can be obtained based on those accompanying drawings without creative labor.
Figure 1 is a schematic exploded view in perspective of a food machine according to an embodiment of the present application;
Figure 2 is a schematic assembled sectional view in perspective of a food machine according to an embodiment of the present application;
Figure 3 is a schematic assembled sectional view in perspective of a pot of a food machine according to an embodiment of the present application;
Figure 4 is a schematic enlarged view of a part of Figure 3;
Figure 5 is a schematic assembled view in perspective of a base and a first driving mechanism according to an embodiment of the present application;
Figure 6 is a schematic exploded view in perspective of a first driving mechanism according to an embodiment of the present application;
Figure 7 is a schematic exploded view in perspective of a removable cutter assembly according to an embodiment of the present application;
Figure 8 is a schematic assembled view in perspective of a removable cutter assembly according to an embodiment of the present application.

### References:

| | | |
|---|---|---|
| Food machine | | 100 |
| Machine base 1 | Electric motor 10 | First gear 11 |
| Second gear 12 | Third gear 13 | Fourth gear 14 |
| First coupler 15 | Second coupler 16 | First accommodating chamber 17 |
| Second accommodating chamber 18 | | |
| Pot 2 | Base 20 | Pot body 21 |
| Side wall 210 | Bottom wall 211 | Third accommodating chamber 22 |
| Heating assembly 23 | Temperature control assembly 24 | |
| Removable cutter assembly 3 | Rotary shaft assembly 30 | First rotary shaft 301 |
| Rotating member 302 | Base body 3021 | Second magnetic member 3022 |
| Stirring cutter assembly 31 | Stirring cutter 310 | Third magnetic member 311 |
| Assembling part 312 | Roller assembly 32 | Roller support 320 |
| Roller 321 | | |
| First driving mechanism 4 | First driving assembly 40 | Body part 401 |
| First magnetic member 402 | First box 403 | Assembling hole 404 |
| Second driving assembly 41 | Driving rod 410 | |
| Fourth magnetic member 411 | Receiving part 412 | |
| Heat insolating plate 5 | | |

### Detailed description of the embodiments

Exemplary embodiments will be described in detail here, and examples thereof are shown in the accompanying drawings. When the following description refers to the drawings, unless otherwise indicated, the same reference numbers in different drawings designate the same or similar elements. The modes of realization described in the following exemplary embodiments do not represent all the modes of realization conforming with the present invention. On the contrary, they are merely examples of devices and methods conforming with some aspects of the present invention as detailed in the appended claims.

The terms used in the present invention are only for the purpose of describing specific embodiments and are not intended to limit the present invention. The singular forms "a/an", "said" and "the" used in the present invention and the appended claims are also intended to include plural forms, unless the context clearly indicates other meanings. It should also be understood that the term "and/or" as used herein refers to and includes any or all possible combinations of one or more associated listed items.

It should be understood that although the terms "first", "second", "third", etc. may be used in the present invention to describe various information, the information should not be limited to these terms. These terms are only used to distinguish the same type of information from each other. For example, without departing from the scope of the present invention, first information may also be referred to as second information, and similarly, second information may also be referred to as first information. Depending on the context, the word "if" as used herein can be interpreted as "when" or "during" or "in response to determining that."

The following describes in detail a food machine according to the present invention in reference to the accompanying drawings. Provided that there is no conflict, the following embodiments and features in the modes of realization can be combined with each other.

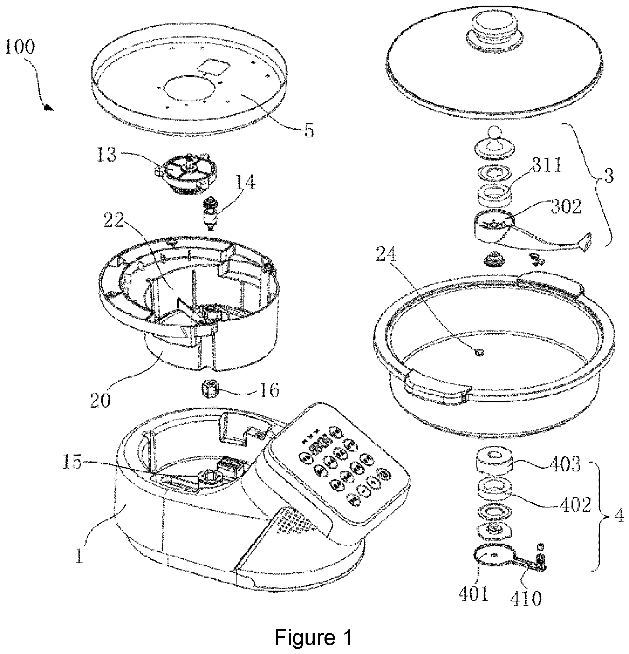

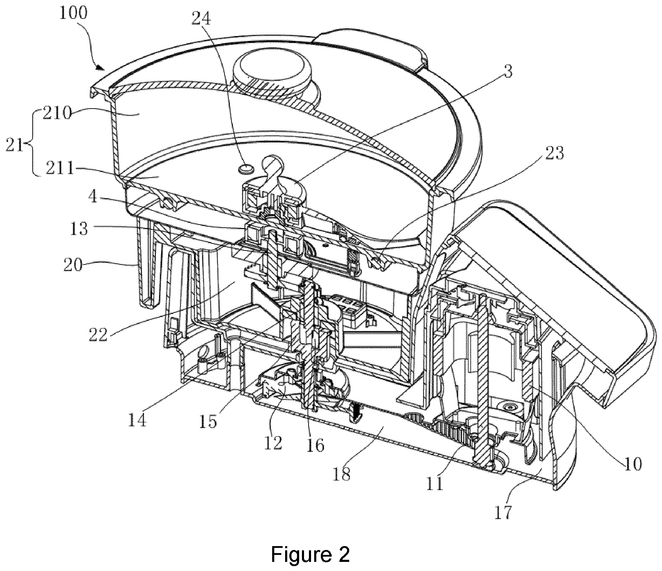

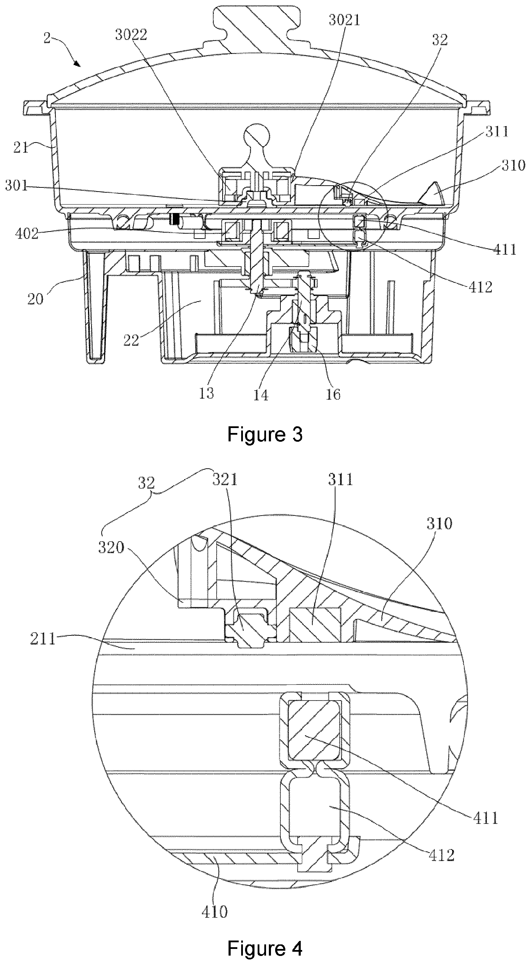

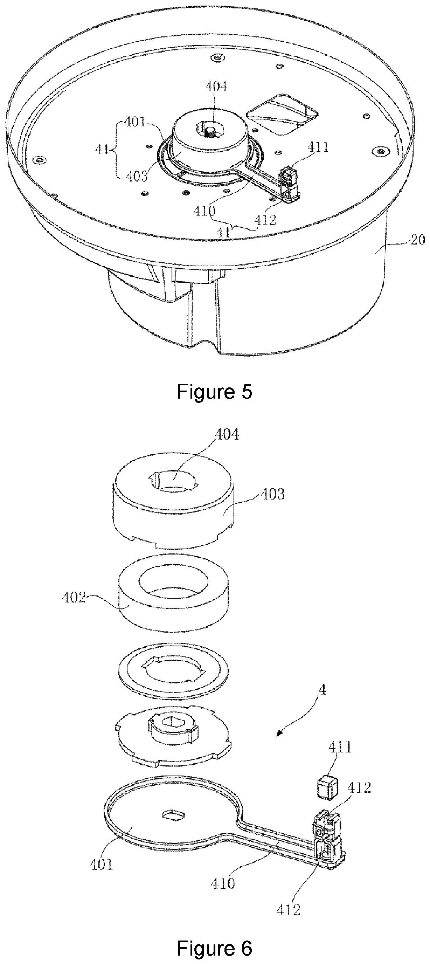

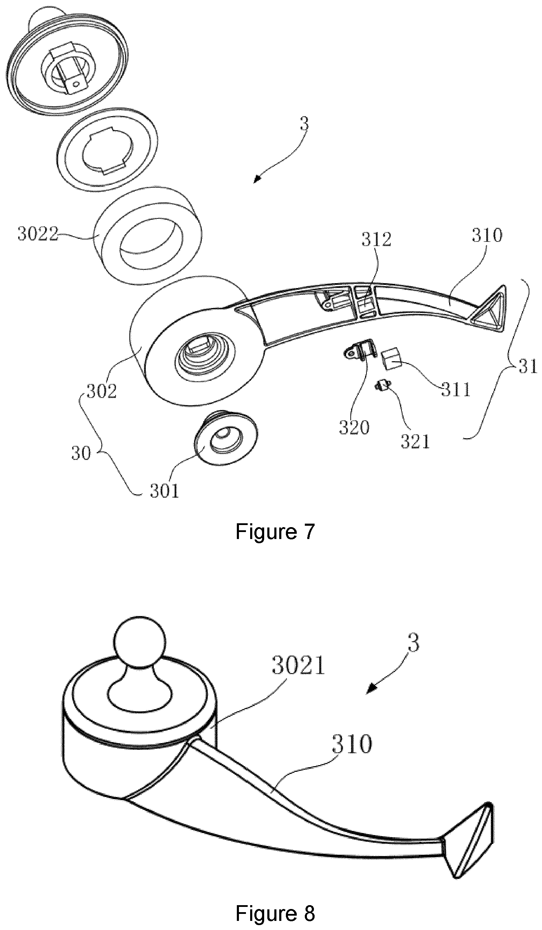

In reference to Figures 1 to 8, a food machine 100 comprises a machine base 1 and a pot 2 assembled to the machine base 1. The pot 2 is provided inside with a removable cutter assembly 3. The machine base 1 is provided inside with a first driving mechanism 4 that drives the removable cutter assembly 3. The first driving mechanism 4 comprises a first driving assembly 40 and a second driving assembly 41 connected with the first driving assembly 40, and the removable cutter assembly 3 comprises a rotary shaft assembly 30 adapted to the first driving assembly 40 and a stirring cutter assembly 31 adapted to the second driving assembly 41.

In an embodiment, the first driving assembly 40 comprises a body part 401 and a first magnetic member 402 provided at the body part 401. The rotary shaft assembly 30 comprises a first rotary shaft 301 and a rotating member 302 removably assembled to the first rotary shaft 301 and capable of rotating around the first rotary shaft 301. The rotating member 302 comprises a base body 3021 and a second magnetic member 3022 adapted to the first magnetic member 402 and provided inside the base body 3021. The stirring cutter assembly 31 comprises a stirring cutter 310 extending from the base body 3021 and a third magnetic member 311 provided inside the stirring cutter 310. The base body 3021 is of a circular cylindrical hollow structure inside which the second magnetic member 3022 is placed; and a magnetic isolation cup (not designated by a reference) that limits the position of the second magnetic member 3022 is provided above the second magnetic member 3022. A lid (not designated by a reference) assembled to the base body 3021 is provided above the magnetic isolation cup, in order to prevent food materials from entering the base body 3021 during stirring while maintaining the aesthetics of the product.

The second driving assembly 41 comprises a driving rod 410 extending radially from the body part 401. The driving rod 401 is provided with a fourth magnetic member 411 adapted to the third magnetic member 311. The cooperation between the first magnetic member 402 and the second magnetic member 3022 enables the rotating member 302, after it is assembled to the first rotary shaft 301, to be driven to rotate at a specific position and thus drive the entire removable cutter assembly 3 to rotate, and the cooperation between the third magnetic member 311 and the fourth magnetic member 411 enhances the rotating torsion of the stirring cutter 310 and improves the product's stirring performance. The first magnetic member 402, the second magnetic member 3022, the third magnetic member 311, and the fourth magnetic member 411 can all be magnets. By the cooperation between the first magnetic member and the second magnetic member, the positioning and driving of the removable cutter assembly in the pot is achieved, and by the cooperation between the third magnetic member and the fourth magnetic member, the mode of driving the removable cutter assembly is changed from one-end driving to multi-point driving, thus increasing the torsion driving the stirring cutter assembly, requiring less effort for overall driving, and effectively avoiding the phenomenon of shifting in position of the removable cutter assembly in the case of one-end driving.

The stirring cutter 310 is provided with a roller assembly 32 located on the same side as the third magnetic member 311. The roller assembly 32 comprises a roller support 320 assembled to the stirring cutter 310 and a roller 321 provided at the roller support 320. The side of the stirring cutter 310 facing the bottom of the pot forms a mounting part (not designated by a reference) which is provided with a first assembling hole (not designated by a reference), and the roller support 320 is provided with a second assembling hole (not designated by a reference) adapted to the first assembling hole, the roller assembly 32 being assembled to the stirring cutter 310 by means of a screw passing through the first assembling hole and the second assembling hole. The roller 321 can rotate circumferentially along the bottom of the pot. By providing the roller assembly 32, friction caused by the stirring cutter 310 being pressed against the bottom of the pot when the magnetic force is excessive can be prevented, effectively protecting the stirring cutter 310 and the bottom of the pot from wearing and reducing resistance to the rotation of the stirring cutter 310.

The driving rod 410 is provided radially with at least one receiving part 412 inside which the fourth magnetic member 411 is received; and the stirring cutter 310 is provided with at least an assembling part 312 inside which the third magnetic member 311 is provided, the receiving part 412 corresponding to the assembling part 312. The number needed of the fourth magnetic member 411 and the third magnetic member 311 can be determined based on product design requirements, providing flexibility.

The machine base 1 is provided inside with a transmission mechanism that drives the first driving mechanism 4 to rotate. The transmission mechanism comprises an electric motor 10 and a first reduction gear set rotably connected with the electric motor 10. The first reduction gear set comprises a first gear 11 and a second gear 12. The first gear 11 is assembled to a tail end of an electric motor shaft of the electric motor 10. The second gear 12 is drivingly connected with the first gear 11 by a transmission belt. The transmission mechanism provides power source for the functioning of the food machine 100 and the first reduction gear set reduces the rotating speed of the electric motor 10 so that the stirring cutter assembly 31 receives a higher torsion, facilitating the achievement of different functions of the food machine 100.

The machine base 1 is provided inside with a first accommodating chamber 17 that receives the electric motor 10 and a second accommodating chamber 18 that receives the first reduction gear set, and the pot 2 comprises a base 20 provided with a third accommodating chamber 22 that receives the first driving mechanism 4 and a pot body 21 assembled to the base 20.

The pot body 21 comprises a side wall 210 and a bottom wall 211 provided with a heating assembly 23 and a temperature control assembly 24, a heat isolating plate 5 being provided between the pot body 21 and the base 20. By providing the heat isolating plate 5, the first magnetic member 402 and the fourth magnetic member 411 can be better protected from the phenomenon of stopping being magnetic when heated, ensuring normal functioning of the food machine 100.

The first driving assembly 40 is assembled to a third gear 13 that is drivingly connected with the second gear 12 or indirectly connected with the second gear 12 via a fourth gear 14. By providing the fourth gear 14, the rotating speed of the electric motor 10 can be further reduced for output, while a direct connection between the third gear 13 and the second gear 12 further simplifies the product's structure.

The second gear 12 is provided with a first coupler 15, and the third gear 13 or the fourth gear 14 is provided with a second coupler 16 adapted to the first coupler 15, the first coupler 15 and the second coupler 16 being provided coaxially. With the first coupler 15 and the second coupler 16 being provided coaxially, the output efficiency of the transmission connection between the third gear 13 and the second gear 12 or between the fourth gear 14 and the second gear 12 can be ensured.

The first magnetic member 402 is provided inside a first box 403 assembled to the body part 401 and provided with an assembling hole 404 through which an output shaft of the third gear 13 passes to drive the first driving mechanism 4 to rotate. By providing the first magnetic member 402 inside the first box, damage to the first magnetic member 402 during use can be avoided while simplifying the assembly between the first magnetic member 402 and the body part 401.

What has been described above are only preferred embodiments of the present invention and are not intended to limit the present invention. Any modification, equivalent replacement, improvement, etc. made within the spirit and principle of the present invention shall fall within the scope of protection of the present invention.

## Claims

1. A food machine, **characterized in that**, it comprises a machine base (1) and a pot (2) assembled to the machine base (1), the pot (2) being provided inside with a removable cutter assembly (3), the machine base (1) being provided inside with a first driving mechanism (4) that drives the removable cutter assembly (3); **in that** the first driving mechanism (4) comprises a first driving assembly (40) provided with a first magnetic member (402) and a second driving assembly (41) connected with the first driving assembly (40), **in that** the removable cutter assembly (3) comprises a rotary shaft assembly (30) adapted to the first driving assembly (40) and a stirring cutter assembly (31) adapted to the second driving assembly (41), and **in that** the rotary shaft assembly (30) is provided with a second magnetic member (3022) adapted to the first magnetic member (402), the stirring cutter assembly (31) is provided with a third magnetic member (311), and the second driving assembly (41) is provided with a fourth magnetic member (411) adapted to the third magnetic member (311).

2. The food machine of claim 1, wherein the first driving assembly (40) comprises a body part (401) inside which the first magnetic member (402) is provided, the rotary shaft assembly (30) comprises a first rotary shaft (301) and a rotating member (302) removably assembled to the first rotary shaft (301) and comprising a base body (3021) inside which the second magnetic member (3022) is provided, the stirring cutter assembly (31) comprises a stirring cutter (310) extending from the base body (3021) and inside which stirring cutter the third magnetic member (311) is provided, and the second driving assembly (41) comprises a driving rod (410) extending radially from the body part (401) and inside which driving rod the fourth magnetic member (411) is provided.

3. The food machine of claim 1 or 2, wherein the stirring cutter (310) is provided with a roller assembly (32) located on the same side as the third magnetic member (311) and comprising a roller support (320) assembled to the stirring cutter (310) and a roller (321) provided at the roller support (320).

4. The food machine of claim 2, wherein the driving rod (410) is provided radially with at least one receiving part (412) inside which the fourth magnetic member (411) is received; and in that the stirring cutter (310) is provided with at least one assembling part (312) inside which the third magnetic member (311) is provided, the receiving part (412) corresponding to the assembling part (312).

5. The food machine of anyone of preceding claims, wherein the machine base (1) is provided inside with a transmission mechanism that drives the first driving mechanism (4) to rotate and comprises an electric motor (10) and a first reduction gear set rotably connected with the electric motor (10), the first reduction gear set comprising a first gear (11) assembled to a tail end of an electric motor shaft of the electric motor (10) and a second gear (12) drivingly connected with the first gear (11) by a transmission belt.

6. The food machine of claim 5, wherein the first driving assembly (40) is assembled to a third gear (13) that is drivingly connected with the second gear (12) or indirectly connected with the second gear (12) via a fourth gear (14).

7. The food machine of claim 6, wherein the second gear (12) is provided with a first coupler (15), and the third gear (13) or the fourth gear (14) is provided with a second coupler (16) adapted to the first coupler (15), the first coupler (15) and the second coupler (16) being provided coaxially.

8. The food machine of claim 6 or 7, wherein the first magnetic member (402) is provided inside a first box (403) which is assembled to the body part (401) and provided with an assembling hole (404) through which an output shaft of the third gear (13) passes to drive the first driving mechanism (4) to rotate.

9. The food machine of anyone of claims 5 to 8, wherein the machine base (1) is provided inside with a first accommodating chamber (17) that receives the electric motor (10) and a second accommodating chamber (18) that receives the first reduction gear set, and the pot (2) comprises a base (20) provided with a third accommodating chamber (22) that receives the first driving mechanism (4) and a pot body (21) assembled to the base (20).

10. The food machine of claim 9, wherein the pot body (21) comprises a side wall (210) and a bottom wall (211) provided with a heating assembly (23) and a temperature control assembly (24), a heat isolating plate (5) being provided between the pot body (21) and the base (20).
